# EUROPEAN PATENT APPLICATION

(11) **EP 2 023 618 A2**
(43) Date of publication of application: **11.02.2009**
(21) Application number: 08161537.9
(22) Date of filing: 31.07.2008
(51) Int. Cl.: H04N 5/44

(54) **Digital broadcast receiving apparatus**

(30) Priority: 09.08.2007 JP 2007208351
(71) Applicant: Funai Electric Co., Ltd., Daito-shi Osaka 574-0013 (JP)
(72) Inventor: Tokoshima, Susumu c/o Funai Electric Co., Ltd., Osaka 574-0013 (JP)
(74) Representative: Erny, Tobias

(57) **Abstract**

An MPU of a digital broadcast receiving apparatus comprises; reception capable/incapable determining means that determines whether or not it is possible to receive television broadcast through receiving means for each of UHF channels which are physical channels to which individual frequency bands are set; country name obtaining means that, for each of the UHF channels, obtains through the receiving means country name identification information for identifying a country in which a viewer for the television broadcast resides when the reception capable/incapable determining means determines that it is possible to receive the television broadcast; country name determining means that determines most frequently appeared country name information among pieces of the country identification information obtained by the country name obtaining means, the most frequently appeared country name information indicating the country name identification information that has been most frequently obtained; and country name setting means that sets the most frequently appeared country name information thus determined as country name identification information corresponding to a country in which the digital broadcast receiving apparatus is installed.

## Description

### BACKGROUND OF THE INVENTION

### 1. Field of the Invention

The present invention relates to a digital broadcast receiving apparatus receiving digital television broadcast and connected to a monitor in such a manner to display received video image information on the monitor.

### 2. Description of Related Art

A broadcast receiving apparatus for receiving television broadcast and connected to a monitor such that received video information can be watched externally on the monitor has a channel preset function for scanning received frequencies, for example, from low to high for channels through which television broadcast can be received and registering such channels in an internal memory as preset channels.

Various apparatuses, methods, and the like are proposed for efficiently performing the process of presetting channels as described above. For example, JP-AH08-195914 discloses a channel selection apparatus in that, when a user inputs country information and language information using a remote commander or a key inputting circuit, a microprocessor refers to a corresponding relationship between countries and/or languages and preferential orders of formats of broadcasting station codes stored in a third memory and searches the broadcasting station codes in accordance with the preferential orders.

However, in a conventional broadcast receiving apparatus provided with the above-mentioned channel selection apparatus or the like, the user is supposed to set such an item as the country information in advance, which sometimes makes the operation complicated.

### SUMMARY OF THE LNVENTION

The present invention is made in view of the foregoing problem, and it is an object of the present invention to provide a digital broadcast receiving apparatus allowing accurate setting of the country information.

To achieve the above objects, according to one aspect of the present invention, a digital broadcast receiving apparatus that receives digital television broadcast and is connected to a monitor in such a manner to display received video image information on the monitor, comprises: receiving means that receives digital television broadcast of preset frequency bands; reception capable/incapable determining means that determines whether or not it is possible to receive digital television broadcast through the receiving means for each of UHF channels which are physical channels to which individual frequency bands are set; country name obtaining means that, for each of the UHF channels, obtains through the receiving means country name identification information for identifying a country in which a viewer for the television broadcast resides when the reception capable/incapable determining means determines that it is possible to receive the digital television broadcast; country name determining means that determines most frequently appeared country name information among pieces of the country identification information obtained by the country name obtaining means, the most frequently appeared country name information indicating the country name identification information that has been most frequently obtained; and country name setting means that sets the most frequently appeared country name information determined by the country name determining means as country name identification information corresponding to a country in which the digital broadcast receiving apparatus is installed.

According to this configuration, for each of the UHF channels, i.e., a physical channel having a predetermined frequency band, it is determined through the receiving means whether or not it is possible to receive the television broadcast. If it is determined that it is possible to receive the television broadcast, the country name identification information for identifying the name of the country where the viewer for the television broadcast resides is obtained for each of the UHF channels through the receiving means. Then, among the pieces of country name identification information thus obtained, the most frequently appeared country name information is determined. Since the most frequently appeared country name information thus determined is set as the country name identification information for the country where the digital broadcast receiver is installed, it is possible to set the country information accurately.

Specifically, the UHF channels to which frequency bands are set in advance have the same frequency bands across the European countries. Therefore, it is determined whether or not it is possible to receive the television broadcast for each of the UHF channels through the receiving means. If it is determined that the reception is possible, the country name identification information for identifying the name of the country where the viewer for that television broadcast resides is obtained through the receiving means for each of the UHF channels. Then, among the pieces of country name identification information thus obtained, the most frequently appeared country name information is set as the country name identification information for the country where the digital broadcast receiver is installed. Accordingly, the user is not required to set the country information, and the country information can be set accurately.

For example, in an border area (e.g., area adjacent to a border between France and Germany), it is possible to receive the television broadcast including several types of country name identification information (here, for example, the country name identification information indicating France and the country name identification information indicating Germany). Since the most frequently appeared country name information is set as the country name identification information for the country where the digital broadcast receiver is installed, it is possible to set the country information accurately.

### BRIEF DESCRIPTION OF THE DRAWINGS

Fig. 1 is a block diagram showing a configuration example of a digital broadcast receiver according to the present invention;
Fig. 2 is a block diagram showing one example of a configuration of the principal portion of the digital broadcast receiver according to the present invention;
Fig. 3A shows UHF frequency band information covered in every European country;
Fig. 3B shows VHP frequency band information in France;
Fig. 3C shows VHF frequency band information in Germany;
Fig. 4 depicts a flowchart (first half portion) showing an operation example of the digital broadcast receiver (particularly, MPU); and
Fig. 5 depicts a flowchart (last half portion) showing an operation example of the digital broadcast receiver (particularly, MPU).

### DETAILED DESCRIPTION OF PREFERRED EMBODIMENTS

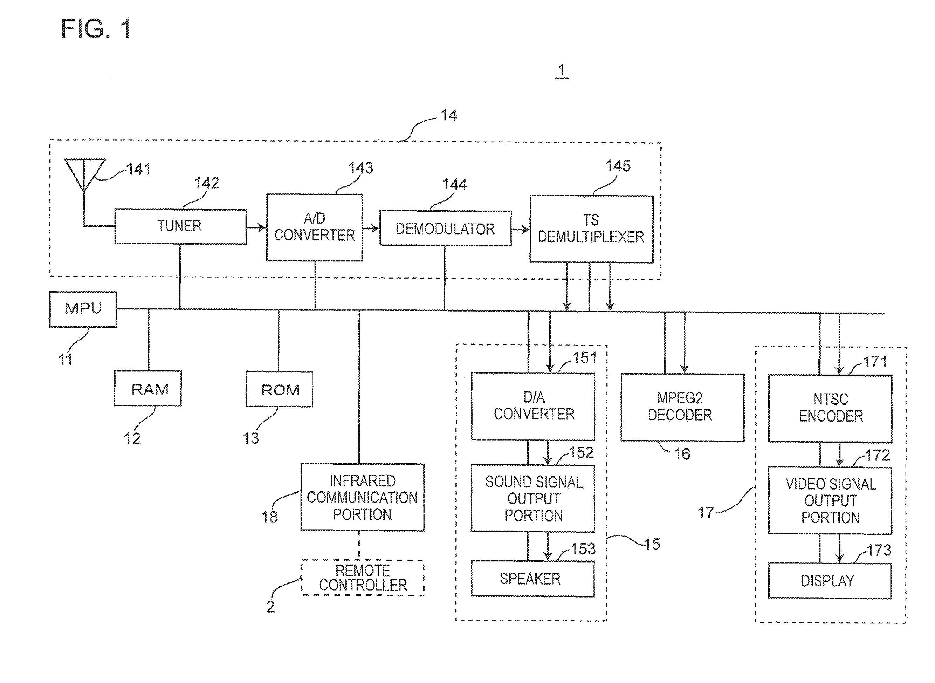

Hereinafter, embodiments of the present invention will be described with reference to the accompanying drawings. Fig. 1 is a block diagram showing a configuration example of a digital broadcast receiver I according to the present invention. The digital broadcast receiver 1 (digital broadcast receiving apparatus) is connected to a remote controller 2 in a communicable manner by means of infrared communication.

The digital broadcast receiver 1, by receiving input operation by the user, receives television broadcast and outputs video image and sound to a display 173 and a speaker 153, respectively, and comprises an MPU 11, a RAM 12, a ROM 13, a receiving portion 14, a sound output portion 15, an MPEG2 decoder 16, an image output portion 17, and an infrared communication portion 18.

The MPU (Micro Processing Unit) 11 controls an entire function of the digital broadcast receiver 1. The RAM (Random Access Memory) 12 stores such information as sound information and video image information in a read and write manner. The ROM (Read Only Memory) 13 stores therein a control program or the like for operating the MPU 11.

The receiving portion 14 (receiving means) receives and demodulates television broadcast and comprises an antenna 141, a tuner 142, an A/D converter 143, a demodulator 144, and a TS demultiplexer 145.

The antenna 141 receives television broadcast waves. The tuner 142 selects a broadcast program from among preset channels in the television broadcast waves received by the antenna 141. The A/D converter 143 converts the output signal (analog signal) from the tuner 142 into digital information. The demodulator 144 demodulates the outputted information from the A/D converter 143. The TS (Transport Stream) demultiplexer 145 separates the outputted information demodulated and outputted by the demodulator 144 into types of information and outputs the result.

The sound output portion 15 outputs the sound corresponding to the television broadcast received by the receiving portion 14, and comprises a D/A converter 151, a sound signal output portion 152, and a speaker 153. The D/A converter 151 converts sound information (digital information) fed out from the TS demultiplexer 145 into an analog signal. The sound signal output portion 152 outputs the sound signal that is converted into an analog signal by the D/A converter 151. The speaker 153 outputs the sound corresponding to the sound signal fed out from the sound signal output portion 152.

The MPEG2 (Motion Picture Experts Group 2) decoder 16 decodes the video image information fed out from the TS demultiplexer 145 into video image information before compression.

The image output portion 17 outputs the video image information decoded by the MPEG2 decoder 16, and comprises an NTSC encoder 171, a video signal output portion 172, and a display 173. The NTSC (National Television Standards Committee) encoder 171 converts the video image information decoded by the MPEG2 decoder 16 into a television signal in NTSC format. The video signal output portion 172 outputs the television signal in NTSC format fed out from the NTSC encoder 172 to the display 173. The display 173 (monitor) comprises an LCD (Liquid Crystal Display), a PDP (Plasma Display Panel), or the like, and displays the video image corresponding to the television signal outputted from the video signal output portion 172.

The infrared communication portion 18 receives from the remote controller 2 various types of operation instructions including power on/off, selection of channels, and various settings of the digital broadcast receiver 1.

Next, a description will be given of the operation when the digital broadcast receiver 1 receives broadcast. First, the transmitted digital broadcast waves are received by the antenna 141. When the operation for selecting a channel performed through the remote controller 2 is received by the digital broadcast receiver 1, the tuner 142 switches over to a transponder used for the reception. The digital broadcast waves thus received are converted into digital information by the A/D converter 143 and demodulated by the demodulator 144.

Here, the digital broadcast waves are transmitted from the transmission side (transmitting station) in the form of TS (Transport Stream) packets. The TS packets comprise video image information, sound information, control information, and the like. These types of information are separated from each another, outputted by the TS demultiplexer 145, and stored in the RAM12, respectively. Then, the sound information read out from the RAM 12 is converted into an analog signal by the D/A converter 151, and outputted as sound from the speaker 153 through the sound signal output portion 152,

In addition, the video image information read out from the RAM 12 is decoded into the video image information before compression by the MPEG2 decoder 16, converted into a television signal in NTSC format by the NTSC encoder 171, and displayed on the display 173 as a video image through the video signal output portion 172.

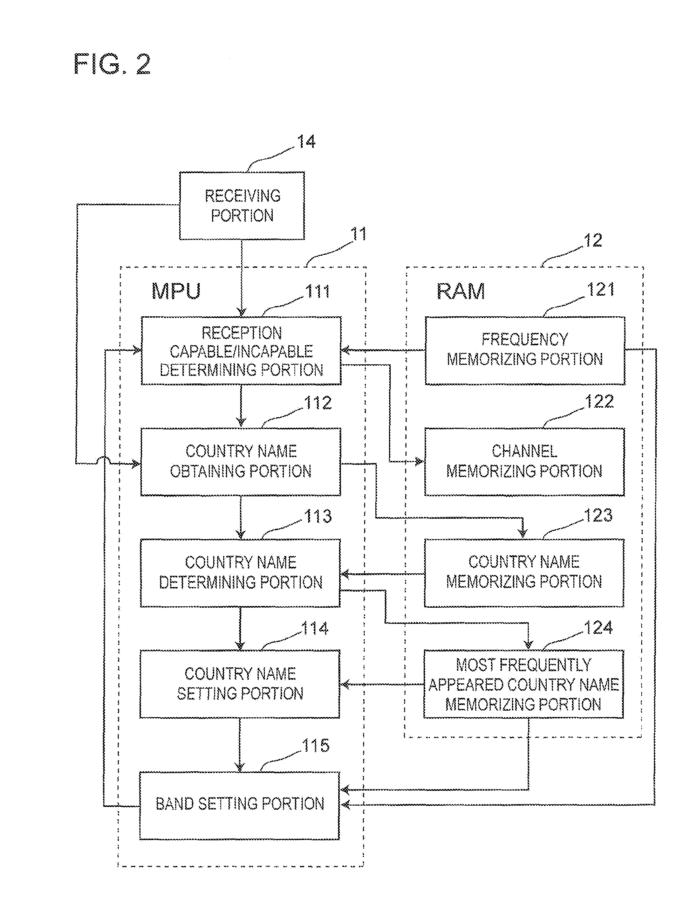

Fig. 2 is a block diagram showing one example of a configuration of the principal portion of the digital broadcast receiver 1 according to the present invention. The MPU 11 is functionally provided with a reception capable/incapable determining portion 111, a country name obtaining portion 112, a country name determining portion 113, a country name setting portion 114, and a band setting portion 115. The RAM 12 is functionally provided with a frequency memorizing portion 121, a channel memorizing portion 122, a country name memorizing portion 123, and a most frequently appeared country name memorizing portion 124.

Here, the MPU 11, by executing a control program stored in advance in the ROM 13 shown in Fig. 1, functions as the functional portions such as the reception capable/incapable determining portion 111, the country name obtaining portion 112, the country name determining portion 113, the country name setting portion 114, and the band setting portion 115, and makes the RAM 12 function as the functional portions such as the frequency memorizing portion 121, the channel memorizing portion 122, the country name memorizing portion 123, and the most frequently appeared country name memorizing portion 124.

Furthermore, among various types of data stored in the RAM 12 and the ROM 13 shown in Fig, 1, the data that can be stored in a detachable storage medium may be arranged to be readably stored by such a drive as, for example, a hard disk drive, an optical disc drive, a flexible disk drive, a silicon disk drive, or a cassette-medium reading device. In this case, the storage medium will be, for example, a hard disk, an optical disc, a flexible disk, a CD (Compact Disc), a DVD (Digital Versatile Disc), a semiconductor memory, or the like.

The frequency memorizing portion 121 (frequency memorizing means) stores therein in advance the VHF (Very High Frequency) frequency band information for each of a plurality of pieces of country name identification information. At the same time, the frequency memorizing portion 121 stores therein in advance UHF (Ultra High Frequency) frequency band information. The frequency band information stored in the frequency memorizing portion 121 is read out by the reception capable/incapable determining portion 111 and the band setting portion 115.

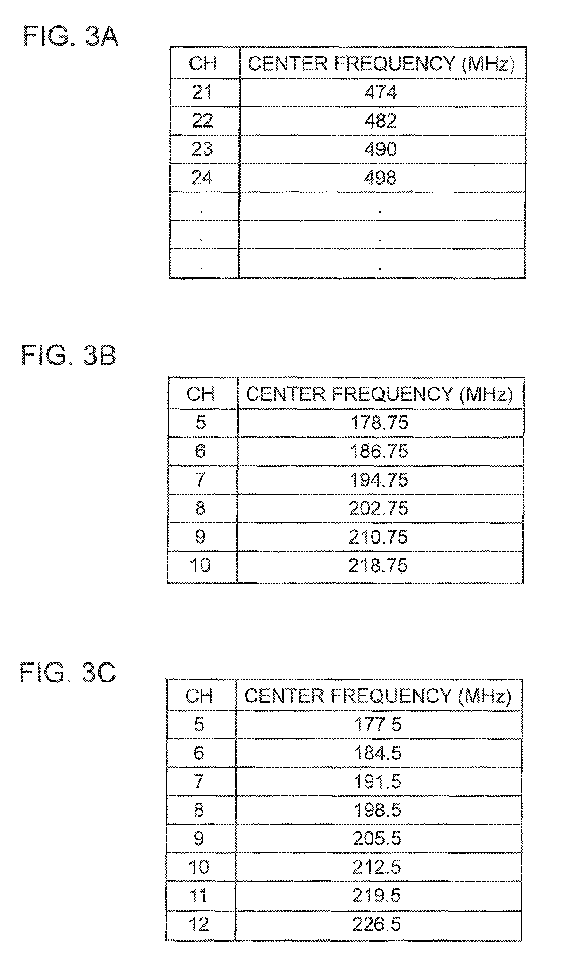

Figs. 3A to 3C illustrate tables showing one example of the frequency band information stored in the frequency memorizing portion 121. Channel numbers are shown on the left side of each table, and center frequencies in individual frequency bands are shown on the right side of each table. Fig. 3A shows the UHF frequency band information covered in every European country. Fig. 3B shows the VHF frequency band information in France (VHF television broadcast for a country name of France where the target viewer resides). Fig. 3C shows the VHF frequency band information in Germany (VHF television broadcast for a country name of Germany where the target viewer resides),

For example, the center frequencies of the channel numbers 21 and 22 of the UHF band covered in every European country are 474 MHz and 482 MHz, respectively. At the same time, the center frequencies of the channel numbers 5 and 6 of the VHF band in France are 178.75 MHz and 186.75 MHz, respectively. The center frequencies of the channel numbers 5 and 6 of the VHF band in Germany are 177.5 MHz and 184.5 MHz, respectively. In this way, since the center frequencies included in the VHF band are different between France and Germany, it is necessary to set the country name to receive the VHF television broadcast.

Fig. 2 is used again to describe the functional configuration of the present invention. The channel memorizing portion 122 (channel memorizing means) stores therein the channel number information (i.e., "channel list") corresponding to television broadcast that can be received. The channel number information to be memorized in the channel memorizing portion. 122 is stored (written) by the reception capable/incapable determining portion 111.

The country name memorizing portion 123 (part of country name determining means) stores therein the country name identification information obtained by the country name obtaining portion 112 in association with the appearance information which indicates the number of appearances as an identical country name and which is obtained by the country name obtaining portion 112. The country name identification information and the appearance information stored in the country name memorizing portion 123 are read out by the country name determining portion. 113.

The most frequently appeared country name memorizing portion 124 (part of band setting means) stores therein the country name identification information that is determined as the most frequently appeared country name information indicating the country name identification information that has been most frequently obtained by the country name determining portion 113. The country name identification information to be memorized in the most frequently appeared country name memorizing portion 124 is stored (written) by the country name determining portion 113 and read out by the country name setting portion 114 and the band setting portion 115.

The reception capable/incapable determining portion 111 (reception capable/incapable determining means) determines whether or not it is possible to receive, through the receiving portion 14, television broadcast for each of the UHF channels, i.e., physical channels, whose frequency bands are stored in the frequency memorizing portion 121, and records (writes) in the channel memorizing portion 122 the channel number information on which the reception is determined to be possible.

The reception capable/incapable determining portion 111 also determines whether or not it is possible to receive, through the receiving portion 14, television broadcast for each of the VHF channels, i.e., physical channels, whose frequency bands are set by the band setting portion 115, and records (writes) in the channel memorizing portion 122 the channel number information on which the reception is determined to be possible.

Here, the reception capable/incapable determining portion 111 determines that the reception is possible when the bit error rate (BER) in the broadcast waves received through the receiving portion 14 is equal to or smaller than a predetermined threshold value (e.g., 1 × 10⁻⁷) which is set in advance.

The country name obtaining portion 112 (country name obtaining means), when the reception capable/incapable determining portion 111 determines that the reception is possible, obtains through the receiving portion 14 the country name identification information of a country where the target viewer resides for the corresponding television broadcast in each of the UHF channels and writes the result thus obtained in the country name memorizing portion 123.

To be specific, the country name obtaining portion 112 obtains the country name identification information based on the country code information (country_code) included in TOT (Time Offset Table) information that is a table included in the TS (Transport Stream) received through the receiving portion 14 and that defines the standard time of each country (refer to ETSI EN 300 468 V1.7.1 (2006 - 05)), and writes the result thus obtained in the country name memorizing portion 123.

In addition, when any UHF channel includes a plurality of logical channels (LCN, Logical Channel Number) that correspond to channel numbers selected by the user, the country name obtaining portion 112 obtains the country name identification information for each of the logical channels and writes the result in the country name memorizing portion 123. For example, when the physical channel number 21 includes three logical channel numbers, namely 2, 4, and 14, the country name obtaining portion 112 obtains the country name identification information corresponding to each of the logical channel numbers and writes the result in the country name memorizing portion 123.

The country name determining portion 113 (part of country name determining means) determines the most frequently appeared country name information among the pieces of the country name identification information that have been obtained by the country name obtaining portion 112. Specifically, the country name determining portion 113 determines the country name identification information corresponding to the largest appearance information among the pieces of appearance information stored in the country name memorizing portion 1 23 as the most frequently appeared country name information and stores it in the most frequently appeared country name memorizing portion 124.

The country name setting portion 114 (country name setting means) sets the most frequently appeared country name information that is determined by the country name determining portion 113 as country name identification information corresponding to a country where the digital broadcast receiver 1 is installed (i.e., it is set as country name identification information that is used in various settings such as channel setting for the VHF channels).

The band setting portion 115 (part of band setting means) reads out the VHF frequency bands corresponding to the country name identification information (country name identification information stored in the most frequently appeared country name memorizing portion 124) set by the country name setting portion 114 and sets the VHF frequency bands.

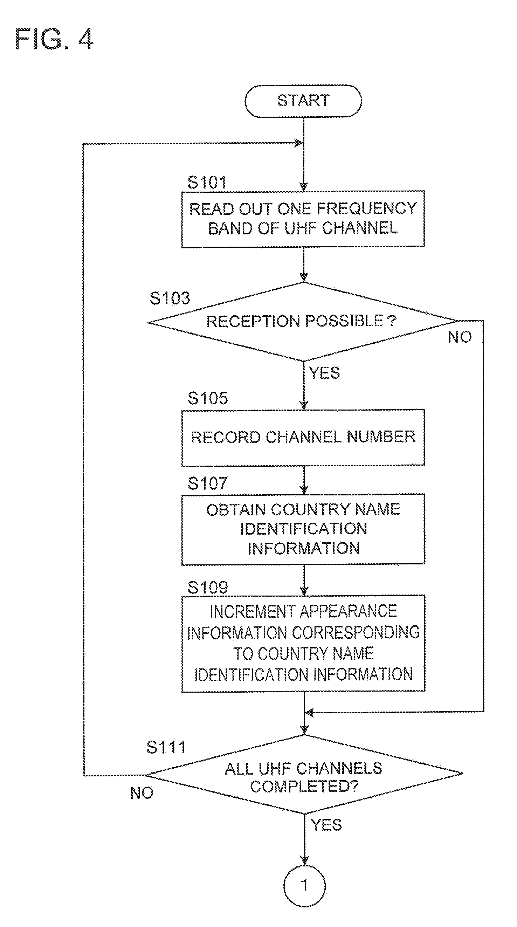

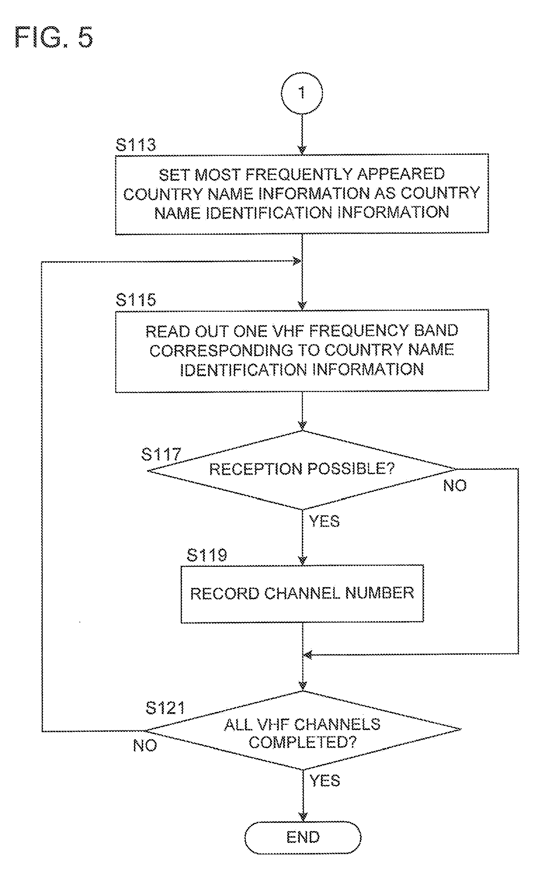

Figs. 4 and 5 depict flowcharts showing an operation example of the digital broadcast receiver 1 (particularly, MPU 11). Here, for the sake of convenience, a description will be given of a case in which the frequency memorizing portion 121 stores in advance a plurality of pieces of UHF frequency band information (refer to Fig. 3A) and, at the same time, a plurality of pieces of VHF frequency band information each corresponding to each of a plurality of pieces of country name information (Figs. 3B and 3C). First, one piece of frequency band information is read out by the reception capable/incapable determining portion 111 from among the plurality of pieces of UHF frequency band information stored in the frequency memorizing portion 121 (S101).

Then, it is determined whether or not the television broadcast can be received for the frequency band information that is read out in step S101 (S103). If it is determined that the television broadcast can not be received ("No" in S103), the process goes to step S109. If it is determined that the television broadcast can be received ("Yes" in S103), the reception capable/incapable determining portion 111 writes the channel number information corresponding to the television broadcast that is determined to be received in the channel memorizing portion 122 (S105). Then, the country identification information is obtained and written in the country name memorizing portion 123 by the country name obtaining portion 112 (S107).

Then, if identical country name identification information that was obtained in step S107 has been already stored in the country name memorizing portion 123 by the country name obtaining portion 112, the appearance information corresponding to the country name identification information obtained in step S107 is incremented by one and written in the country name memorizing portion 123 (S109). When the process in step S109 is completed or if it is determined "No" in step S103, the reception capable/incapable determining portion 111 determines the process for determining whether reception is possible or not for all of the UHF channels stored in the frequency memorizing portion 121 has been completed (S111). If it is determined that all the UHF channels have not been checked ("No" in S111), the process returns to step S101 and other frequency band information is read out in step S101 to repeat the processes after step S101.

If it is determined that all of the UHF channels have been checked ("Yes" in S111), as shown in Fig. 5, the most frequently appeared country name information is determined by the country name determining portion 113, stored in the most frequently appeared country name memorizing portion 124, and set by the country name setting portion 114 as the country name identification information for a country where the digital broadcast receiver 1 is installed (S113). Next, the band setting portion 115 reads out from the frequency memorizing portion 121 one VHF frequency band corresponding to the country name identification information that is set in step S113 (S115).

Then, the reception capable/incapable determining portion 111 determines whether or not the television broadcast can be received for the frequency band that is read out in step S115 (S117). If it is determined that the television broadcast can not be received ("No" in S117), the process goes to step S121. If it is determined that the television broadcast can be received ("Yes" in S117), the reception capable/incapable determining portion 111 writes in the channel memorizing portion 122 (S119) the channel number information corresponding to the VHF channel of the frequency band read out in step S115.

When the process in step S119 is completed or if it is "No" in step S117, the reception capable/incapable determining portion 111 determines the process for determining whether reception is possible or not for all of the VHF channels stored in the frequency memorizing portion 121 has been completed (S121). If there are still some channels that need to be determined ("No" in S121), the process returns to step S115, Then, in step S115, other frequency band information is read out for repeating the processes after step S115. If it is determined that the all VHF channels have been checked for possibility of reception ("Yes" in S 121), the process is completed.

In this way, for each of the UHF channels, i.e., a physical channel having a predetermined frequency band, it is determined through the receiving portion 14 whether or not it is possible to receive the television broadcast. If it is determined that it is possible to receive the television broadcast, the country name identification information for identifying the name of the country where the viewer for the television broadcast resides is obtained for each of the UHF channels through the receiving portion 14. Then, among the pieces of country name identification information thus obtained, the most frequently appeared country name information is determined. Since the most frequently appeared country name information thus determined is set as the country name identification information for the country where the digital broadcast receiver 1 is installed, it is possible to set the country information accurately.

Specifically, the UHF channels to which frequency bands are set in advance have the same frequency bands across the European countries (refer to Fig. 3A). Therefore, it is determined whether or not it is possible to receive the television broadcast for each of the UHF channels through the receiving portion 14. If it is determined that the reception is possible, the country name identification information for identifying the name of the country where the viewer for that television broadcast resides is obtained through the receiving portion 14 for each of the UHF channels. Then, among the pieces of country name identification information thus obtained, the most frequently appeared country name information is set as the country name identification information for the county where the digital broadcast receiver 1 is installed. Accordingly, the user is not required to set the country information, and the country information can be set accurately.

For example, in an border area (e.g., area adjacent to a border between France and Germany), it is possible to receive the television broadcast including several types of country name identification information (here, for example, the country name identification information indicating France and the country name identification information indicating Germany). Since the most frequently appeared country name information is set as the country name identification information for the country where the digital broadcast receiver is installed, it is possible to set the country information accurately.

At the same time, the country name identification information is obtained based on the country code information included in the TOT information which is included in the received radio waves and which is a table defining the standard time for each country, it is possible to set the country information further accurately.

To be specific, as defined in the ETSI, the digital broadcasting standards in Europe, the TOT information which is a table defining the standard time for each country includes a descriptor that indicates offset time and includes country code information (refer to ETSI EN 300 468 V1.7.1 (2006 - 05)). Therefore, since the country identification information is obtained based on such country code information included in the TOT information, it is possible to set the country information further accurately.

Furthermore, if any UHF channel includes a plurality of logical channel numbers (LCN) corresponding to channel numbers that can be selected by the user, the country name identification information is obtained for each of the logical channels. Therefore, it is possible to set the country information further accurately.

Additionally, the VHF frequency band information is stored in the frequency memorizing portion 121 in association with a plurality pieces of country name identification information respectively (refer to Figs. 3B and 3C), and the VHF frequency band is set by reading out the VHF frequency band corresponding to the country name identification information that has been set, from the frequency memorizing portion 121. Then, it is determined through the receiving portion 14 whether or not the television broadcast in the VHF channels, i.e., physical channels corresponding to the frequency band thus set, can be received. Accordingly, since the channel number information corresponding to the VHF channel which is determined to be received is recorded in the channel memorizing portion 122, it is possible to accurately record the channel number information of the television broadcast corresponding to the VHF frequency band that can be received.

This means that the VHF frequency band corresponding to the accurately set country name identification information is set and that, for each of the VHF channels that are the physical channels corresponding to the set frequency band, it is determined whether or not the television broadcast can be received, and the channel numbers corresponding to the VHF channels that have been determined to be received are recorded in the channel memorizing portion 122. Therefore, it is possible to accurately record the channel number information of the VHF television broadcast.

For example, in an border area (e.g., area adjacent to a border between France and Germany), it is possible to receive the television broadcast including several types of country name identification information (here, for example, the country name identification information indicating France and the country name identification information indicating Germany). Since the VHF frequency band corresponding to the accurately set country name identification information is set, it is possible to set the frequency band of the VHF channels accurately even if the frequency band of the VHF channels differs from country to country. Therefore, it is possible to accurately record the channel number information of the VHF television broadcast.

Further, when the bit error rate in the broadcast waves received through the receiving portion 14 is equal to or smaller than a predetermined threshold value (e.g., 1 x 10⁻⁷), it is determined that the broadcast can be received. Therefore, it is possible to accurately determine whether or not the broadcast can be received.

It is to be noted that the present invention may also be applied to the following cases. (A) Although the case in which the digital broadcast receiving apparatus is the digital broadcast receiver 1 for receiving digital broadcast is described in the embodiment, the digital broadcast receiving apparatus may be such that receives both digital broadcast and analog broadcast.

In such a case, it is preferable that the digital broadcast receiving apparatus be configured as described below: the receiving portion 14 is arranged to be capable of receiving the analog television broadcast; the frequency memorizing portion 121 stores in advance therein the frequency band information of the analog broadcast in association with a plurality of pieces of country name identification information; the band setting portion 115 sets the frequency bands of the analog broadcast by reading out from the frequency memorizing portion 121 the frequency bands of the analog broadcast corresponding to the country name identification information that is set by the country name setting portion 114; and the reception capable/incapable determining portion 111 determines through the receiving portion 14 whether or not it is possible to receive the analog broadcast in each of the frequency bands of the analog broadcast, and records in the channel memorizing portion 122 the channel number information corresponding to the frequency band determined that it can be received.

In the case where the digital broadcast receiving apparatus is configured as mentioned above, pieces of the frequency band information of analog broadcast are stored in advance in the frequency memorizing portion 121 in association with a plurality of pieces of country name identification information respectively. Then, the frequency bands of analog broadcast are set by reading out the frequency bands of analog broadcast corresponding to the country name identification information that has been set, from the frequency memorizing portion 121. It is determined through the receiving portion 14 whether or not the analog broadcast can be received for each of the frequency bands of analog broadcast, and the channel number information corresponding to the frequency band determined that it can be received is recorded in the channel memorizing portion 122. Therefore, it is possible to accurately record the channel number information of analog broadcast. Here, in the case of the analog broadcast, if the intensity of the broadcasting waves received through the receiving portion 14 is equal to or larger than a predetermined threshold value, it may be determined that the reception is possible.

This means that the frequency bands of analog broadcast corresponding to the country name identification information that has been accurately set are set, it is determined through the receiving portion 14 whether or not the analog broadcast can be received for each of the frequency bands of analog broadcast thus set, and the channel number information corresponding to the frequency band determined that it can be received is recorded in the channel memorizing portion 122. Therefore, it is possible to accurately record the channel number information of analog television broadcast.

For example, in an border area (e.g., area adjacent to a border between France and Germany), it is possible to receive the television broadcast including several types of country name identification information (here, for example, the country name identification information indicating France and the country name identification information indicating Germany). Since the frequency bands of analog broadcast corresponding to the accurately set country name identification information are set, it is possible to set accurate frequency bands of analog broadcast even if the frequency bands of analog broadcast differ from country to country. Therefore, it is possible to accurately record the channel number information of analog television broadcast.

(B) In the embodiment, although the description was given of the case in which the MPU 11 comprises the functional portions such as the reception capable/incapable determining portion 111, the country name obtaining portion 112, the country name determining portion 113, the country name setting portion 114, and the band setting portion 115, at least one functional portion among the reception capable/incapable determining portion 111, the country name obtaining portion 112, the country name determining portion 113, the country name setting portion 114, and the band setting portion 115 may be realized by hardware such as a circuit.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A digital broadcast receiving apparatus that receives digital television broadcast and is connected to a monitor in such a manner to display received video image information on the monitor, comprising:
receiving means that receives digital television broadcast of preset, frequency bands;
reception capable/incapable determining means that determines whether or not it is possible to receive digital television broadcast through the receiving means for each of UHF (Ultra High Frequency) channels which are physical channels to which individual frequency bands are set;
country name obtaining means that, for each of the UHF channels, obtains through the receiving means country name identification information for identifying a country in which a viewer for the television broadcast resides when the reception capable/incapable determining means determines that it is possible to receive the digital television broadcast;
country name determining means that determines most frequently appeared country name information among pieces of the country identification information obtained by the country name obtaining means, the most frequently appeared country name information indicating the country name identification information that has been most frequently obtained; and
country name setting means that sets the most frequently appeared country name information determined by the country name determining means as country name identification information corresponding to a country in which the digital broadcast receiving apparatus is installed.

2. The digital broadcast receiving apparatus according to claim 1,
wherein the country name obtaining means obtains the country name identification information on the basis of country code (country_code) information included in TOT (Time Offset Table) information, the TOT information being provided as a table defining standard time for each country.

3. The digital broadcast receiving apparatus according to claim 1 or 2,
wherein, if any of the UHF channels includes a plurality of logical channels (LCN) each of which corresponds to each of channel numbers selected by a user, the country name obtaining means obtains the country name identification information for each of the logical channels.

4. The digital broadcast receiving apparatus according to any one of claims 1 to 3, further comprising:
channel memorizing means for storing therein channel number information corresponding to the digital television broadcast which is determined that it is possible to receive;
frequency memorizing means for storing therein in advance VHF (Very High Frequency) frequency band information in association with each of a plurality of pieces of the country name identification information; and
band setting means for setting VHF frequency bands by reading out from the frequency memorizing means the VHF frequency band information corresponding to the country name identification information that is set by the country name setting means,
wherein the reception capable/incapable determining means determines whether or not the digital television broadcast can be received through the receiving means for each of VHF channels that are physical channels and correspond respectively to the VHF frequency bands set by the band setting means, and records in the channel memorizing means channel number information corresponding to the VHF channels for which it is determined that the digital television broadcast can be received.

5. The digital broadcast receiving apparatus according to any one of claims 1 to 4,
wherein the receiving means is so configured to be capable of further receiving analog television broadcast,
the frequency memorizing means stores therein in advance frequency band information for analog television broadcast in association with each of a plurality of pieces of the country name identification information,
the band setting means sets frequency bands of analog television broadcast by reading out from the frequency memorizing means the frequency band information for analog television broadcast corresponding to the country name identification information that is set by the country name setting means, and
the reception capable/incapable determining means determines whether or not the analog television broadcast can be received through the receiving means for each of the frequency bands for analog television broadcast that are set by the band setting means, and records in the channel memorizing means channel number information corresponding to the frequency bands for which it is determined that the analog television broadcast can be received.

6. The digital broadcast receiving apparatus according to claim 5,
wherein, when the digital television broadcast is received through the receiving means and if a bit error rate (BER) in broadcasting waves received through the receiving means is equal to or smaller than a predetermined threshold value, the reception capable/incapable determining means determines that the digital television broadcast can be received, and
when the analog television broadcast is received through the receiving means and if an intensity of broadcasting waves received through the receiving means is equal to or higher than a predetermined threshold value, the reception capable/incapable determining means determines that the analog television broadcast can be received.
